# FASCICULE DE BREVET EUROPEEN

(11) **EP 2 140 132 B1**
(45) Date de publication et mention de la délivrance du brevet: **11.09.2019**
(21) Numéro de dépôt: 08787984.7
(22) Date de dépôt: 12.03.2008
(51) Int. Cl.: F02N 11/04, F02N 11/08, F02D 41/20

(54) **SYSTEME D'ARRET/RELANCE MOTEUR A ALTERNO-DEMARREUR**
SYSTEM ZUM STOPPEN/NEUSTARTEN EINES MOTORS MIT GENERATOR-STARTER
SYSTEM FOR STOPPING/RESTARTING AN ENGINE WITH ALTERNATOR-STARTER

(30) Priorité: 27.04.2007 FR 0754746
(43) Date de publication de la demande: 06.01.2010
(73) Titulaire: Valeo Equipements Electriques Moteur, 94046 Créteil Cedex (FR)
(72) Inventeur: LECOLE, Brice, F-75012 Paris (FR); DE VRIES, Arnaud, F-92170 Vanves (FR); HOFFMANN, Christian, F-75014 Paris (FR); DELEVALLEE, Jean-Louis, F-80090 Amiens (FR)
(86) Numéro de dépôt international: PCT/FR2008/050423
(87) Numéro de publication internationale: WO 2008/139069

(56) Documents cités:
- EP-A- 0 751 322
- EP-A2- 1 136 298
- FR-A- 2 875 556
- GB-A- 2 427 485
- US-A1- 2003 087 724
- US-A1- 2004 206 325
- US-A1- 2005 230 977
- US-A1- 2006 154 782

## Description

La présente invention concerne de manière générale des systèmes d'arrêt/relance pour des véhicules automobiles à moteur thermique. Plus particulièrement, l'invention concerne des systèmes d'arrêt/relance comprenant une machine électrique tournante réversible de type alterno-démarreur et des moyens électroniques de commande et de puissance.

Un tel système est par exemple décrit dans la demande de brevet américain US 2004/0206325 A1 ou dans la demande de brevet français FR2875556 A.

Il est connu dans l'état de la technique un système d'arrêt/relance moteur à alterno-démarreur équipant un véhicule à boîte de vitesses automatique ou robotisée. Dans ce type de système, du fait de la boîte de vitesses robotisée, la relance du moteur thermique intervient dans des conditions qui sont prévisibles et bien maîtrisées par les unités de commande électronique du véhicule intervenant dans les opérations d'arrêt/relance moteur.

L'intégration d'un système d'arrêt/relance moteur à alterno-démarreur dans un véhicule à boîte de vitesses manuelle pose par contre un certain nombre de difficultés. Ces difficultés sont dues notamment au fait que le conducteur influence directement l'état du système de transmission, à travers ses actions sur la pédale d'embrayage et le levier de changement de vitesse. De plus, les conducteurs ont des habitudes de conduite différentes, ce qui rend délicat la définition d'une stratégie de relance moteur basée seulement sur des critères combinatoires.

La présente invention a pour objet de fournir un système d'arrêt/relance moteur à alterno-démarreur d'un type nouveau et apte à être intégré dans un véhicule à boîte de vitesses manuelle.

Le système d'arrêt/relance moteur comprend une machine électrique tournante réversible de type alterno-démarreur et des moyens électroniques comportant un module de pilotage de relance moteur.

Conformément à l'invention, le système d'arrêt/relance moteur comprend également des moyens de détection équipant des organes de bord du véhicule pour détecter des états des organes de bord, et une machine d'états incluse dans le module de pilotage de relance moteur et apte à délivrer une anticipation d'un ordre de relance du moteur thermique à partir d'un suivi séquentiel des états des organes de bord, ladite anticipation étant utilisée par le module de pilotage de relance moteur pour commander une opération de débrayage d'un système d'embrayage piloté équipant le véhicule.

La machine d'états comporte une nombre prédéterminé de noeuds d'état répartis sur trois niveaux d'états, un premier niveau d'états regroupant des états dans lesquels un levier de changement de vitesse des organes de bord du véhicule est dans une position « neutre », un second niveau d'états regroupant des états dans lesquels le levier de changement de vitesse est dans une position « vitesse 1 » ou « vitesse 2 » et un troisième niveau d'états regroupant des états dans lesquels le levier de changement de vitesse est dans des positions autres que celles correspondant aux premier et second niveaux d'états.

L'anticipation d'un ordre de relance produite par la machine d'états est utilisée par le module de pilotage de relance moteur pour commander une opération de pré-magnétisation d'un rotor de la machine électrique tournante réversible.

Selon les différentes formes de réalisation auxquelles se prête l'invention, le système d'arrêt/relance moteur peut comporter l'une au moins des caractéristiques supplémentaires suivantes :
- les moyens de détection comprennent un premier capteur détectant des états d'un levier de changement de vitesse des organes de bord du véhicule.
- les moyens de détection comprennent un second capteur détectant des efforts appliqués par le conducteur sur un levier de changement de vitesse du véhicule.
- les moyens de détection comprennent un troisième capteur détectant des états d'une pédale d'embrayage du véhicule.
- les moyens de détection comprennent un quatrième capteur détectant des états d'une pédale de frein du véhicule.
- les moyens de détection comprennent au moins un capteur de type tout-ou-rien qui détecte un actionnement d'une pédale correspondante des organes de bord dans une zone de début de course de celle-ci ou un actionnement de la pédale correspondante dans une zone de fin de course de celle-ci.

Selon un autre aspect, l'invention concerne également un véhicule à boîte de vitesses manuelle et système d'embrayage piloté équipé d'un système d'arrêt/relance moteur à alterno-démarreur tel que décrit brièvement ci-dessus.

D'autres avantages et caractéristiques de la présente invention apparaîtront plus clairement à la lecture de la description ci-dessous de plusieurs formes de réalisation particulières en référence aux dessins annexés, dans lesquels :
- la Fig.1 est un schéma général montrant une configuration d'une forme de réalisation particulière du système de d'arrêt/relance moteur selon l'invention ;
- la Fig.2 montre sous la forme d'un diagramme en trois dimensions une machine d'états incluse dans le système de la Fig.1 ;
- les Figs.3A à 3D montrent, sous la forme d'algorithme, la logique de fonctionnement de la machine d'états de la Fig.2 pour un premier niveau de noeuds d'état de celle-ci ;
- les Figs.4A à 4D montrent, sous la forme d'algorithme, la logique de fonctionnement de la machine d'états de la Fig.2 pour un second niveau de noeuds d'état de celle-ci ; et
- les Figs.5A à 5D montrent, sous la forme d'algorithme, la logique de fonctionnement de la machine d'états de la Fig.2 pour un troisième niveau de noeuds d'état de celle-ci

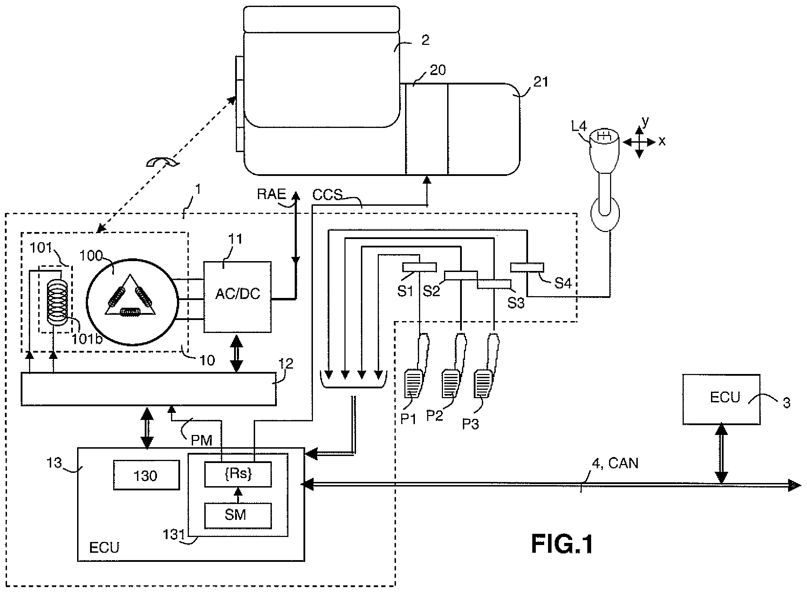

En référence plus particulièrement à la Fig.1, il est maintenant décrit de manière générale la configuration matérielle et fonctionnelle d'une forme de réalisation particulière d'un système d'arrêt/relance moteur à alterno-démarreur 1 selon l'invention.

Comme montré à la Fig.1, le système 1 comprend essentiellement une machine électrique tournante réversible de type alterno-démarreur 10 (désignée simplement « machine électrique » dans la suite de la description), un convertisseur alternatif-continu réversible 11, des circuits électroniques de régulation et de commande 12, une unité électronique de commande 13 (désignée simplement « ECU » dans la suite de la description) et des capteurs S1 à S4.

Les machines électriques tournantes de type alterno-démarreur sont maintenant bien connues des hommes du métier et leur fonctionnement ne sera donc pas décrit ici en détail.

Dans cette forme de réalisation particulière, la machine électrique 10 est de type triphasé et comporte un stator 100 et un rotor bobiné 101 représentés schématiquement à la Fig.1. En variante, le rotor bobiné 101 peut être de type hybride et comporter aussi des aimants permanents interpolaires. Le rotor 101 de la machine électrique 10 est couplé mécaniquement en rotation avec un moteur thermique 2 du véhicule.

Le stator 100 comprend trois bobinages de phase qui, à la Fig.1, sont représentés, à titre d'exemple, dans une connexion dite « triangle ». Ces bobinages de phase sont raccordés électriquement au convertisseur alternatif-continu 11.

Le rotor 101 comprend une bobine d'excitation 101b apte à être alimentée par un courant d'excitation généralement de type à modulation en largeur d'impulsion (modulation « PWM » selon l'acronyme anglais). Le réglage du courant d'excitation de rotor est commandé par les circuits électroniques 12 et l'unité ECU 13 selon des lois de commande propres à des modes de fonctionnement alternateur/démarreur du système 1.

Le convertisseur alternatif-continu réversible 11 est, dans cette forme de réalisation particulière, essentiellement formé d'un pont à transistors à trois branches (non représenté). Les transistors du pont sont habituellement des transistors de puissance de type MOS-FET.

Le pont à transistors du convertisseur 11 est commandé de manière différente selon que le système 1 fonctionne en mode alternateur ou en mode démarreur.

Dans le mode alternateur, le pont à transistors effectue un redressement des tensions alternatives qui sont fournies par la machine électrique 10 lorsque le rotor 101b de celle-ci est entraîné en rotation par le moteur thermique 2, de façon à produire une tension continue alimentant un réseau d'alimentation électrique RAE du véhicule. Le convertisseur 11 opère alors selon un mode de conversion « tensions alternatives vers tension continue ».

Dans le mode démarreur, le pont à transistors du convertisseur 11 fonctionne en onduleur et produit des tensions alternatives triphasées à partir d'une tension continue fournie par une unité de stockage d'énergie électrique (non représentée), du type batterie ou pack de super-condensateurs, du réseau d'alimentation électrique RAE du véhicule. Les tensions alternatives produites alimentent le stator 100 de la machine électrique 10 et provoquent la génération d'un champ électrique tournant qui entraîne en rotation le rotor 101. Le convertisseur 11 opère alors selon un mode de conversion « tension continue vers tensions alternatives ».

Les circuits électroniques 12 remplissent essentiellement des fonctions de réglage du courant d'excitation de rotor et de génération de signaux de commande pour les transistors de puissance du convertisseur alternatif-continu 11. Le fonctionnement des circuits électroniques 12 est supervisé par l'unité ECU 13.

En mode alternateur, des signaux de commande appropriés sont appliqués à des grilles des transistors de puissance du convertisseur alternatif-continu 11 de manière à faire fonctionner celui-ci en mode de redressement synchrone. Le courant d'excitation de rotor est alors réglé par une boucle d'asservissement afin d'obtenir en sortie du convertisseur 11 une tension continue qui est régulée à une valeur de consigne déterminée.

En mode démarreur, des signaux de commande appropriés sont appliqués aux grilles des transistors de puissance du convertisseur alternatif-continu 11 de manière à faire fonctionner celui-ci en mode onduleur. De plus, le courant d'excitation de rotor est réglé de manière à ce que la machine électrique 10 fournisse en rotation un couple mécanique voulu. Des capteurs angulaires (non représentés) équipent la machine électrique 10 pour détecter la position du rotor 101. Ces capteurs fournissent aux circuits 12 des informations qui sont prisent en compte pour la production des signaux de commande appliqués aux grilles des transistors de puissance.

L'unité ECU 13 est par exemple réalisée autour d'un microprocesseur 8 ou 16 bits.

De manière classique, l'unité ECU 13 comprend notamment une unité arithmétique et logique, une mémoire morte, une mémoire vive, des bus internes de communication, ainsi que des circuits d'interface autorisant des échanges de données et de signaux avec les circuits électroniques 12 et des éléments fonctionnels du véhicule situés à l'extérieur du système 1.

Des logiciels de pilotage du système d'arrêt/relance moteur 1 sont implantés dans l'unité ECU 13, notamment un module de pilotage d'arrêt moteur 130 et un module de pilotage de relance moteur 131.

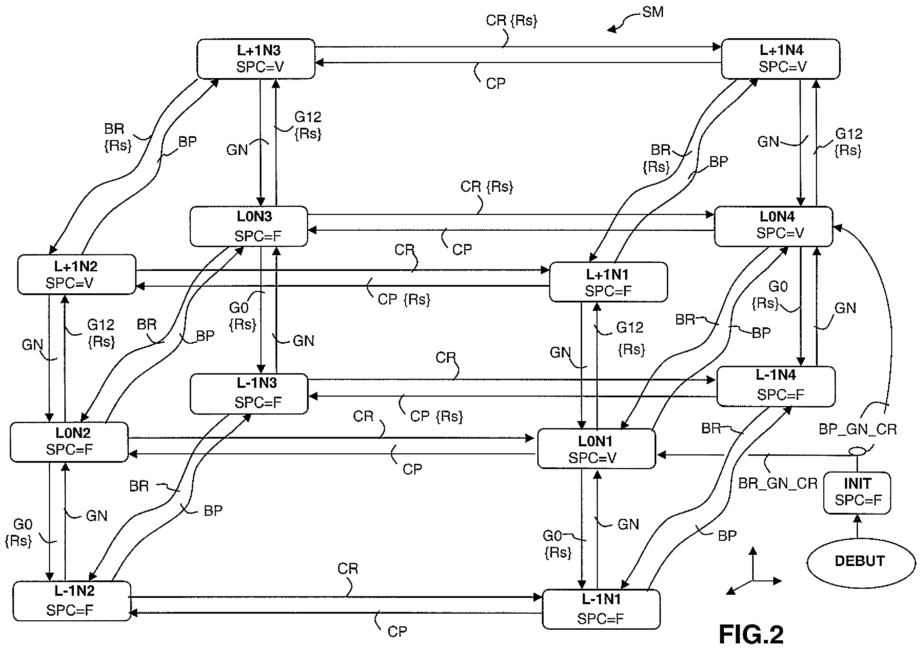

Le module 130 gère l'arrêt du moteur thermique de manière analogue aux systèmes d'arrêt/relance moteur connus de l'état de la technique et ne sera pas décrit ici. Le module de pilotage de relance moteur 131 est détaillé dans la suite de la description en référence plus particulièrement aux Figs.2, 3A à 3D, 4A à 4D et 5A à 5D.

Dans la forme de réalisation particulière montrée à la Fig.1, l'unité ECU 13 est reliée aux circuits électroniques 12 pour échanger des commandes de fonctionnement et des informations d'état relatives essentiellement à la machine électrique 10 et au convertisseur AC/DC 11. L'unité ECU 13 est également reliée à des capteurs S1 à S4 équipant des organes de bord P1 à P3 et L4 du véhicule, à un embrayage piloté 20 et à un bus de communication 4 du véhicule auquel est connectée notamment une unité de commande électronique ECU 3 de contrôle moteur qui est chargée de la gestion du moteur thermique 2.

Les capteurs S1, S2, S3 et S4 forment des moyens de détection d'état et équipent respectivement des pédales d'embrayage P1, de frein P2, d'accélérateur P3 et un levier de boîte de vitesses L4 en tant qu'organes de bord du véhicule.

Les capteurs S1, S2 et S3 ont pour fonction de fournir une information « pédale appuyée » ou « pédale relâchée » pour leurs pédales P1, P2 et P3 respectives.

Un capteur S1, S2 ou S3 peut être formé d'un capteur continu qui fournit une valeur continue, par exemple, entre 0 si la pédale est relâchée et 100 si la pédale est complètement appuyée.

Ou bien, en variante, un capteur S1, S2 ou S3 peut aussi être formé de deux capteurs de type « tout-ou-rien », par exemple, un capteur de début de course et un capteur de fin de course. Le capteur de début de course fournit par exemple un niveau 0 si la pédale est relâchée et un niveau 1 si la pédale est appuyée de plus de 10%. Le capteur de fin de course fournit par exemple un niveau 0 si la pédale est appuyée de moins de 90% et un niveau 1 si la pédale est appuyée de plus de 90%.

Le capteur S4 peut, selon la forme de réalisation, être formé d'un capteur de position de levier de changement de vitesse et d'un capteur de force ou effort, ou d'un capteur de position de levier seulement.

Le capteur de position de levier est un capteur connu de type XY fournissant des déplacements x et y du levier L4 selon des axes perpendiculaires X et Y, respectivement. A partir des déplacements x et y du levier L4, l'unité ECU 13 détermine le rapport de vitesse « vitesse 1 », « vitesse 2 », « vitesse 3 », « vitesse 4 », « vitesse 5 », « vitesse 6 », « neutre » ou « marche arrière » qui est engagé par le conducteur du véhicule.

Le capteur d'effort peut être un capteur de type traction/compression qui est connu de l'homme du métier. Dans la forme de réalisation incluant un capteur d'effort, celui-ci est utilisé pour détecter un effort transversal appliqué au levier de changement de vitesse qui est supérieur à un certain seuil d'effort. Une telle information et celles fournies par les capteurs S1 à S3 et le capteur de position de levier peuvent être utilisées par le système d'arrêt/relance moteur 1 pour anticiper une opération de relance du moteur thermique 2.

Dans certaines applications, le système d'arrêt/relance moteur 1 doit avoir la possibilité de commander le système d'embrayage du véhicule. Cela signifie que le système d'arrêt/relance moteur 1 doit pouvoir imposer une ouverture de l'embrayage quel que soit l'état « appuyée » ou « relâchée » de la pédale d'embrayage P1 et cela essentiellement pour des raisons de sécurité, par exemple, en cas de relance du moteur thermique 2 alors qu'un rapport de vitesse est engagé.

Dans la forme de réalisation décrite, le système d'embrayage comporte un embrayage piloté 20 intercalé entre le moteur thermique 2 et une boîte de vitesses 21 du véhicule et qui peut être actionné au moyen d'un signal de commande d'embrayage CCS fourni par l'unité ECU 13. Il ainsi possible pour le système d'arrêt/relance moteur 1 selon la présente invention de relancer le moteur thermique 2 alors qu'un rapport de vitesse est engagé. Pour cela, le système d'arrêt/relance moteur 1 commande, au moyen du signal CCS, une ouverture de l'embrayage 20 préalablement à une opération de relance du moteur thermique 1 et pendant toute la durée de celle-ci et n'autorise la fermeture de l'embrayage qu'une fois que le moteur thermique 1 a démarré.

Le module de pilotage de relance moteur 131 prend en compte les données fournies par les différentes capteurs S1, S2, S3 et S4 pour ses décisions sur une opération de relance ou pas du moteur thermique 2. Bien entendu, d'autres données, outre celles délivrées par les capteurs S1, S2, S3 et S4, peuvent être fournies à l'unité ECU 13 pour gérer le fonctionnement du système d'arrêt/relance moteur 1. Ces autres données, par exemple, la vitesse du véhicule ou la vitesse de rotation du moteur thermique 2, peuvent être lues par l'unité ECU 13 sur le bus de communication de données 4, par exemple de type CAN, et sont utiles au système 1 pour prendre des décisions relatives aux opérations d'arrêt/relance.

A travers le bus de données 4, différentes commandes, informations d'état et données de mesure peuvent être échangées entre l'unité ECU 13 et les autres unités ECU du véhicule telles que l'unité ECU 3. Ainsi, par exemple, lorsque le module de pilotage d'arrêt moteur 130 détecte que les conditions d'un arrêt moteur sont réunies, une commande d'arrêt du moteur thermique 2 est transmise par le module 130, à travers le bus de données 4, à l'unité ECU 3 de contrôle moteur.

Conformément à l'invention, lorsque le véhicule se trouve en situation de moteur coupé, suite à une commande du système 1, et que le levier de changement de vitesse L4 est inactif depuis une certaine durée déterminée, le système d'arrêt/relance moteur 1 est capable d'anticiper une opération de relance du moteur thermique 2, c'est-à-dire, de prévoir qu'une telle opération doit intervenir dans une avenir proche.

Conformément à l'invention, le système 1 anticipe l'ordre de relance moteur à partir de la prise en compte de l'enchaînement séquentiel d'une ou plusieurs actions du conducteur sur le levier L4, la pédale d'embrayage P1, la pédale de frein P2 et la pédale d'accélérateur P3. De plus, les conditions d'arrêt du moteur thermique 2, suite à une opération d'arrêt commandée par le module 130, peuvent aussi être prises en compte dans certaines formes de réalisation de l'invention.

Cette anticipation de l'ordre de relance du moteur thermique 2 est désignée {Rs} et, comme représenté à la Fig.1, est une sortie d'une machine d'états SM incluse dans le module de pilotage de relance moteur 131.

L'anticipation {Rs} est mise à profit par le système d'arrêt/relance moteur 1 notamment pour effectuer une opération de pré-magnétisation du rotor 101 de la machine électrique tournante.

L'opération de pré-magnétisation du rotor 101 comporte une commande anticipée de l'alimentation en courant de la bobine d'excitation 101b par rapport à l'application de tensions de bobinages statoriques sur la machine électrique 10. Cette commande anticipée établit dans la bobine d'excitation 101b un courant d'excitation qui peut varier en intensité entre une certaine valeur déterminée, inférieure à l'intensité maximale possible, et l'intensité maximale possible.

Cette alimentation anticipée en courant d'excitation assure une pré-magnétisation du rotor 101, permettant ainsi l'obtention d'un couple mécanique voulu, fourni par la machine électrique 10 dès l'application sur le stator 100 des tensions de bobinages statoriques. Ainsi, par exemple, une pré-magnétisation avec un courant d'excitation maximal pendant une durée de l'ordre de 150 millisecondes permettra d'obtenir un couple mécanique important dès le début de la rotation de la machine électrique 10.

Comme montré à la Fig.1, l'anticipation {Rs} peut, conformément à l'invention, être utilisée aussi pour produire le signal de commande d'embrayage CCS fourni au système d'embrayage piloté 20.

En référence maintenant à la Fig.2, il est décrit la structure générale de la machine d'états SM incluse dans le module de pilotage de relance moteur 131 selon l'invention.

Les différents noeuds et transitions d'état de la machine SM, ainsi qu'un module d'initialisation de celle-ci, sont représentés à la Fig.2.

La machine d'états SM comporte trois niveaux d'états qui sont désignés L0, L+1 et L-1. Le niveau L0 comprend les noeuds d'état L0N1, L0N2, L0N3 et L0N4. Le niveau L+1 comprend les noeuds d'état L+1N1, L+1N2, L+1N3 et L+1N4. Le niveau L-1 comprend les noeuds d'état L-1N1, L-1N2, L-1N3 et L-1N4.

La machine d'états SM comporte également un module d'initialisation INIT en entrée du processus de traitement.

Le niveau d'états L0 regroupe des états dans lesquels le levier de changement de vitesse L4 est dans la position « neutre » ou « point mort », aucun rapport de vitesse n'étant alors engagé dans la boîte de vitesses 21.

Le niveau d'états L+1 regroupe des états dans lesquels le levier de changement de vitesse L4 est dans la position «vitesse 1» ou «vitesse 2» et le rapport de vitesse correspondant est engagé dans la boîte de vitesses 21.

Le niveau d'états L-1 regroupe des états dans lesquels le levier de changement de vitesse L4 est dans la position «vitesse 3», «vitesse 4», «vitesse 5», «vitesse 6» ou «marche arrière» et le rapport de vitesse correspondant est engagé dans la boîte de vitesses 21.

Les acronymes indiqués dans le tableau 1 ci-dessous ont ici été adoptés et apparaissent à la Fig.2:

**TABLEAU 1**

| Acronyme de la condition | Condition |
|---|---|
| CP | Pédale d'embrayage P1 appuyée |
| CR | Pédale d'embrayage P1 relâchée |
| BP | Pédale de frein P2 appuyée |
| BR | Pédale de frein P2 relâchée |
| G12 | «Vitesse 1» ou «vitesse 2» engagée |
| GN | «Neutre» engagé |
| G0 | «Vitesse 3», «vitesse 4», «vitesse 5», «vitesse 6» ou «marche arrière» engagée |

Les conditions satisfaites correspondant aux différents noeuds de la machine d'états SM sont indiquées dans le tableau 2 ci-dessous.

**TABLEAU 2**

| Noeud d'état | Condition satisfaite |
|---|---|
| L0N1 | GN_CR_BR |
| L0N2 | GN_CP_BR |
| L0N3 | GN_CP_BP |
| L0N4 | GN_CR_BP |
| L+1N1 | G12_CR_BR |
| L+1N2 | G12_CP_BR |
| L+1N3 | G12_CP_BP |
| L+1N4 | G12_CR_BP |
| L-1N1 | G0_CR_BR |
| L-1N2 | G0_CP_BR |
| L-1N3 | G0_CP_BP |
| L-1N4 | G0_CR_BP |

Dans la notation adoptée ici, le symbole « _ » apparaissant notamment dans le tableau 2 représente un ET logique. Ainsi, par exemple, la condition satisfaite GN_CR_BR du noeud d'état L0N1 signifie que les conditions GN, CR et BR sont toutes les trois vraies (état désigné V ou «1» dans la suite de la description).

Concernant le module d'initialisation INIT, comme montré à la Fig.2, les conditions GN CR BP et GN CR BR en sortie du module INIT conduisent respectivement à l'entrée dans les noeuds L0N4 et L0N1.

Conformément à la machine d'états SM, des transitions sont possibles entre les noeuds de même rang du niveau LO au niveau L+1 et inversement, et entre les noeuds de même rang du niveau LO au niveau L-1 et inversement. Par convention, le rang d'un noeud d'état N1, N2, N3 ou N4 est ici représenté par le chiffre « 1 », « 2 », « 3 » ou « 4 » qui suit la lettre « N ».

Dans un même niveau L0, L+1 ou L-1, des transitions sont possibles entre les noeuds N1 et N2 et inversement, entre les noeuds N2 et N3 et inversement et entre les noeuds N3 et N4 et inversement.

Les transitions du niveau L0 à L+1 interviennent sur l'engagement du rapport de « vitesse 1 » ou « vitesse 2 », à savoir, lorsque la condition G12 devient vraie. Les transitions du niveau L0 à L+1 conduisent à une fourniture par la machine d'états SM de la sortie d'anticipation {Rs}.

Les transitions du niveau L+1 à L0 interviennent sur l'engagement de « neutre », à savoir, lorsque la condition GN devient vraie.

Les transitions du niveau L0 à L-1 interviennent sur l'engagement de « vitesse 3 », « vitesse 4 », « vitesse 5 », « vitesse 6 » ou «marche arrière», à savoir, lorsque la condition G0 devient vraie. Les transitions du niveau L0 à L-1 conduisent à une fourniture par la machine d'états SM de la sortie d'anticipation {Rs}.

Les transitions du niveau L-1 à L0 interviennent sur l'engagement de « neutre », à savoir, lorsque la condition GN devient vraie.

Une condition SPC prenant l'état «V» pour «vrai» ou «F» pour «faux» et représentant l'autorisation d'arrêt du moteur thermique 2 est également représentée à la Fig.2. L'état «V» ou «F» indiqué à la Fig.2 pour la condition SPC est l'état que prend cette condition SPC lorsque le noeud correspondant devient actif dans la machine d'états SM, c'est-à-dire, lors d'une entrée dans le noeud. Ainsi, lorsque SPC=V, le module de pilotage d'arrêt moteur 130 est autorisé à commander un arrêt du moteur thermique 2 conformément à une stratégie d'arrêt moteur pouvant prendre en compte également une ou plusieurs autres conditions pour la commande d'arrêt. Lorsque SPC=F, le module de pilotage d'arrêt moteur 130 n'est pas autorisé à commander un arrêt du moteur thermique 2.

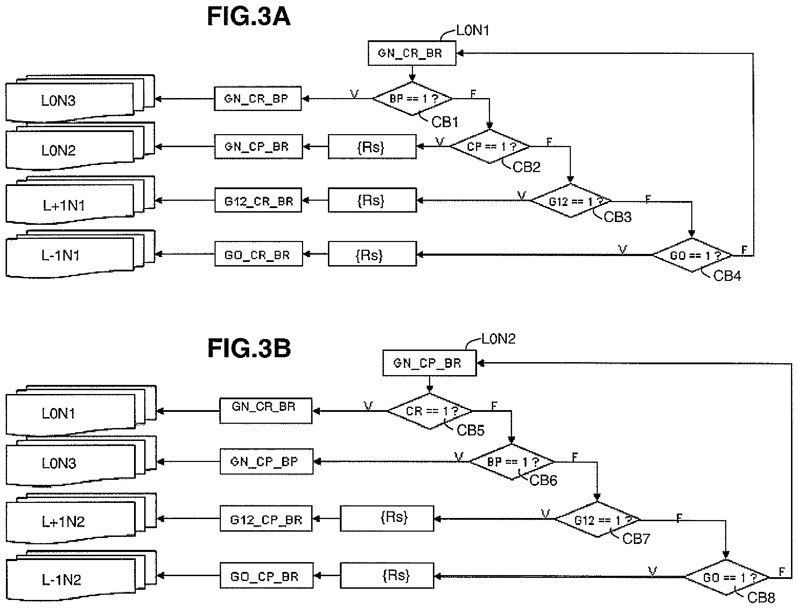

En référence maintenant également aux Figs.3A à 3D, 4A à 4D et 5A à 5D, il est décrit de manière détaillée le fonctionnement des transitions d'état de la machine d'états SM au niveau des différents noeuds d'état de celle-ci.

Comme montré à la Fig.3A sous la forme d'un algorithme logique, les transitions au niveau du noeud L0N1, correspondant à la condition GN_CR_BR, sont traitées au moyen de quatre blocs conditionnels CB1, CB2, CB3 et CB4.

Les blocs conditionnels CB1, CB2, CB3 et CB4 traitent les conditions BP, CP, G12 et G0 respectivement.

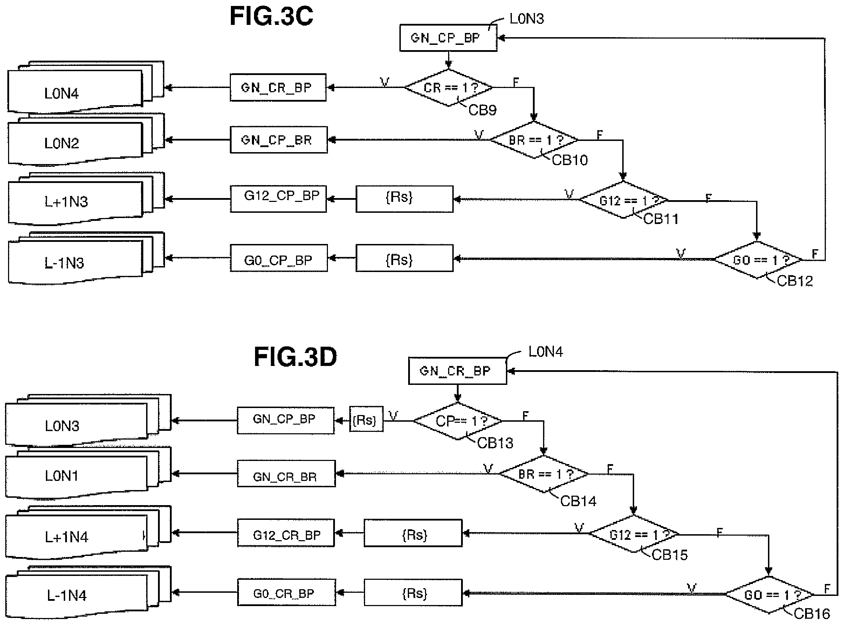

A partir de GN_CR_BR, la condition BP =1 est vérifiée par le bloc CB1. Le symbole « = » de l'égalité est également représenté « == » dans les Figs.3 à 4.

Si la condition BP =1 est Vraie (V), ce qui signifie que la pédale de frein P2 est appuyée, la machine SM commute vers l'état GN_CR_BP du noeud L0N3. Dans le cas contraire, ce qui signifie que la condition BR reste Vraie, la condition CP=1 est ensuite vérifiée par le bloc CB2.

Si la condition CP =1 est Vraie (V), la machine SM commute vers l'état GN_CP_BR du noeud L0N2 et délivre la sortie d'anticipation de relance moteur {Rs}. Dans le cas contraire, la condition G12=1 est ensuite vérifiée par le bloc CB3.

Si la condition G12 =1 est Vraie (V), la machine SM commute vers l'état G12_CR_BR du noeud L+1N1 et délivre la sortie d'anticipation de relance moteur {Rs}. Dans le cas contraire, la condition G0=1 est ensuite vérifiée par le bloc CB4.

Si la condition G0=1 est Vraie (V), la machine SM commute vers l'état G0_CR_BR du noeud L-1N1 et délivre la sortie d'anticipation de relance moteur {Rs}. Dans le cas contraire, le processus de traitement boucle en début d'algorithme et poursuit sa veille d'un changement d'état au moyen des blocs conditionnels CB1, CB2, CB3 et CB4.

Comme montré à la Fig.3B sous la forme d'un algorithme logique, les transitions au niveau du noeud L0N2, correspondant à la condition GN_CP_BR, sont traitées au moyen de quatre blocs conditionnels CB5, CB6, CB7 et CB8.

Les blocs conditionnels CB5, CB6, CB7 et CB8 traitent les conditions CR, BP, G12 et G0 respectivement.

A partir de GN_CP_BR, la condition CR =1 est vérifiée par le bloc CB5.

Si la condition CR =1 est Vraie (V), la machine SM commute vers l'état GN_CR_BR du noeud L0N1. Dans le cas contraire, la condition BP=1 est ensuite vérifiée par le bloc CB6.

Si la condition BP =1 est Vraie (V), la machine SM commute vers l'état GN_CP_BP du noeud L0N3. Dans le cas contraire, la condition G12=1 est ensuite vérifiée par le bloc CB7.

Si la condition G12 =1 est Vraie (V), la machine SM commute vers l'état G12_CP_BR du noeud L0N2 et délivre la sortie d'anticipation de relance moteur {Rs}. Dans le cas contraire, la condition G0=1 est ensuite vérifiée par le bloc CB8.

Si la condition G0=1 est Vraie (V), la machine SM commute vers l'état G0_CP_BR du noeud L0N2 et délivre la sortie d'anticipation de relance moteur {Rs}. Dans le cas contraire, le processus de traitement boucle en début d'algorithme et poursuit sa veille d'un changement d'état au moyen des blocs conditionnels CB5, CB6, CB7 et CB8.

Comme montré à la Fig.3C sous la forme d'un algorithme logique, les transitions au niveau du noeud L0N3, correspondant à la condition GN_CP_BP, sont traitées au moyen de quatre blocs conditionnels CB9, CB10, CB11 et CB12.

Les blocs conditionnels CB9, CB10, CB11 et CB12 traitent les conditions CP, BR, G12 et G0 respectivement.

A partir de GN_CP_BP, la condition CR =1 est vérifiée par le bloc CB9.

Si la condition CR =1 est Vraie (V), la machine SM commute vers l'état GN_CR_BP du noeud L0N4. Dans le cas contraire, la condition BR=1 est ensuite vérifiée par le bloc CB10.

Si la condition BR =1 est Vraie (V), la machine SM commute vers l'état GN_CP_BR du noeud L0N2. Dans le cas contraire, la condition G12=1 est ensuite vérifiée par le bloc CB11.

Si la condition G12 =1 est Vraie (V), la machine SM commute vers l'état G12_CP_BP du noeud L+1N3 et délivre la sortie d'anticipation de relance moteur {Rs}. Dans le cas contraire, la condition G0=1 est ensuite vérifiée par le bloc CB12.

Si la condition G0=1 est Vraie (V), la machine SM commute vers l'état G0_CP_BP du noeud L-1N3 et délivre la sortie d'anticipation de relance moteur {Rs}. Dans le cas contraire, le processus de traitement boucle en début d'algorithme et poursuit sa veille d'un changement d'état au moyen des blocs conditionnels CB9, CB10, CB11 et CB12.

Comme montré à la Fig.3D sous la forme d'un algorithme logique, les transitions au niveau du noeud L0N4, correspondant à la condition GN_CR_BP, sont traitées au moyen de quatre blocs conditionnels CB13, CB14, CB15 et CB16.

Les blocs conditionnels CB13, CB14, CB15 et CB16 traitent les conditions CP, BR, G12 et G0 respectivement.

A partir de GN_CR_BP, la condition CP =1 est vérifiée par le bloc CB13.

Si la condition CP =1 est Vraie (V), la machine SM commute vers l'état GN_CP_BP du noeud L0N3 et délivre la sortie d'anticipation de relance moteur {Rs}. Dans le cas contraire, la condition BR=1 est ensuite vérifiée par le bloc CB14.

Si la condition BR =1 est Vraie (V), la machine SM commute vers l'état GN_CR_BR du noeud L0N1. Dans le cas contraire, la condition G12=1 est ensuite vérifiée par le bloc CB15.

Si la condition G12 =1 est Vraie (V), la machine SM commute vers l'état G12_CR_BP du noeud L+1N4 et délivre la sortie d'anticipation de relance moteur {Rs}. Dans le cas contraire, la condition G0=1 est ensuite vérifiée par le bloc CB16.

Si la condition G0=1 est Vraie (V), la machine SM commute vers l'état G0_CR_BP du noeud L-1N4 et délivre la sortie d'anticipation de relance moteur {Rs}. Dans le cas contraire, le processus de traitement boucle en début d'algorithme et poursuit sa veille d'un changement d'état au moyen des blocs conditionnels CB13, CB14, CB15 et CB16.

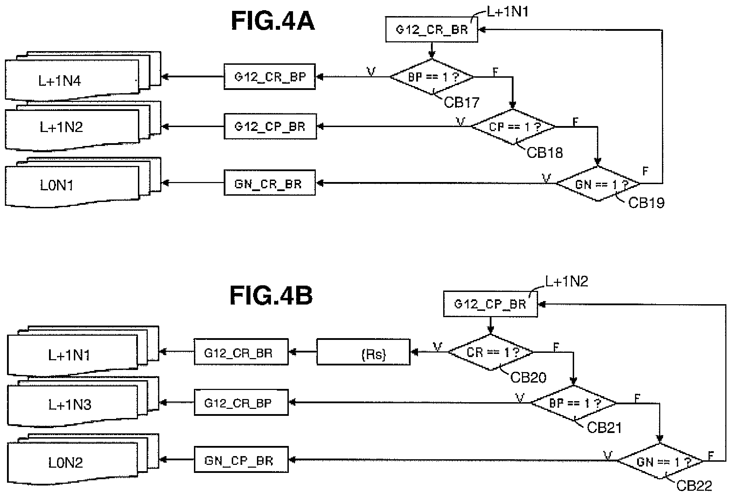

Comme montré à la Fig.4A sous la forme d'un algorithme logique, les transitions au niveau du noeud L+1N1, correspondant à la condition G12_CR_BR, sont traitées au moyen de trois blocs conditionnels CB17, CB18 et CB19.

Les blocs conditionnels CB17, CB18 et CB19 traitent les conditions BP, CP et GN respectivement.

A partir de G12_CR_BP, la condition BP =1 est vérifiée par le bloc CB17.

Si la condition BP =1 est Vraie (V), la machine SM commute vers l'état G12_CR_BP du noeud L+1N4. Dans le cas contraire, la condition CP=1 est ensuite vérifiée par le bloc CB18.

Si la condition CP =1 est Vraie (V), la machine SM commute vers l'état G12_CP_BR du noeud L+1N2. Dans le cas contraire, la condition GN=1 est ensuite vérifiée par le bloc CB19.

Si la condition GN =1 est Vraie (V), la machine SM commute vers l'état GN_CR_BR du noeud L0N1. Dans le cas contraire, le processus de traitement boucle en début d'algorithme et poursuit sa veille d'un changement d'état au moyen des blocs conditionnels CB17, CB18 et CB19.

Comme montré à la Fig.4B sous la forme d'un algorithme logique, les transitions au niveau du noeud L+1N2, correspondant à la condition G12_CP_BR, sont traitées au moyen de trois blocs conditionnels CB20, CB21 et CB22.

Les blocs conditionnels CB20, CB21 et CB22 traitent les conditions CR, BP et GN respectivement.

A partir de G12_CP_BR, la condition CR =1 est vérifiée par le bloc CB20.

Si la condition CR =1 est Vraie (V), la machine SM commute vers l'état G12_CR_BR du noeud L+1N1 et délivre la sortie d'anticipation de relance moteur {Rs}. Dans le cas contraire, la condition BP=1 est ensuite vérifiée par le bloc CB21.

Si la condition BP =1 est Vraie (V), la machine SM commute vers l'état G12_CR_BP du noeud L+1N3. Dans le cas contraire, la condition GN=1 est ensuite vérifiée par le bloc CB22.

Si la condition GN =1 est Vraie (V), la machine SM commute vers l'état GN_CP_BR du noeud L0N2. Dans le cas contraire, le processus de traitement boucle en début d'algorithme et poursuit sa veille d'un changement d'état au moyen des blocs conditionnels CB20, CB21 et CB22.

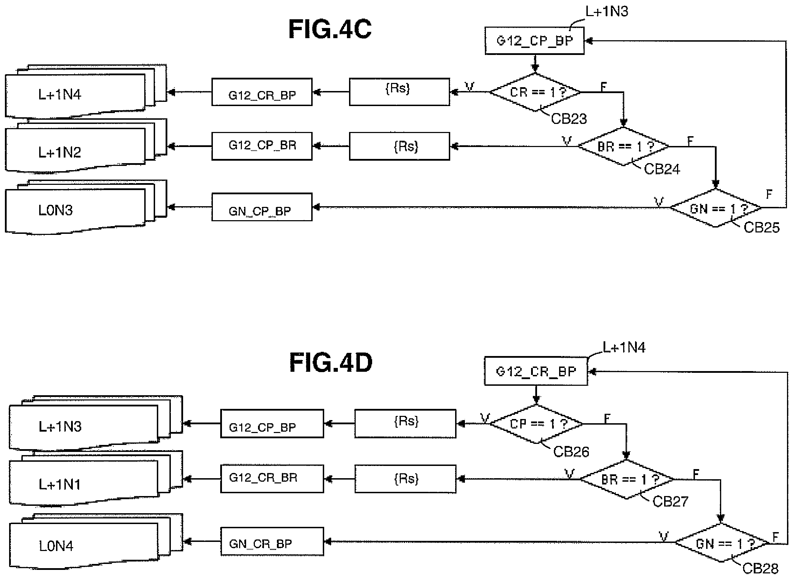

Comme montré à la Fig.4C sous la forme d'un algorithme logique, les transitions au niveau du noeud L+1N3, correspondant à la condition G12_CP _BP, sont traitées au moyen de trois blocs conditionnels CB23, CB24 et CB25.

Les blocs conditionnels CB23, CB24 et CB25 traitent les conditions CR, BR et GN respectivement.

A partir de G12_CP_BP, la condition CR =1 est vérifiée par le bloc CB23.

Si la condition CR =1 est Vraie (V), la machine SM commute vers l'état G12_CR_BP du noeud L+1N4 et délivre la sortie d'anticipation de relance moteur {Rs}. Dans le cas contraire, la condition BR=1 est ensuite vérifiée par le bloc CB24.

Si la condition BR =1 est Vraie (V), la machine SM commute vers l'état G12_CP _BR du noeud L+1N2 et délivre la sortie d'anticipation de relance moteur {Rs}. Dans le cas contraire, la condition GN=1 est ensuite vérifiée par le bloc CB25.

Si la condition GN =1 est Vraie (V), la machine SM commute vers l'état GN_CP_BP du noeud L0N3. Dans le cas contraire, le processus de traitement boucle en début d'algorithme et poursuit sa veille d'un changement d'état au moyen des blocs conditionnels CB23, CB24 et CB25.

Comme montré à la Fig.4D sous la forme d'un algorithme logique, les transitions au niveau du noeud L+1N4, correspondant à la condition G12_CR_BP, sont traitées au moyen de trois blocs conditionnels CB26, CB27 et CB28.

Les blocs conditionnels CB26, CB27 et CB28 traitent les conditions CP, BR et GN respectivement.

A partir de G12_CR_BP, la condition CP =1 est vérifiée par le bloc CB26.

Si la condition CP =1 est Vraie (V), la machine SM commute vers l'état G12_CP_BP du noeud L+1N3 et délivre la sortie d'anticipation de relance moteur {Rs}. Dans le cas contraire, la condition BR=1 est ensuite vérifiée par le bloc CB27.

Si la condition BR =1 est Vraie (V), la machine SM commute vers l'état G12_CR_BR du noeud L+1N1 et délivre la sortie d'anticipation de relance moteur {Rs}. Dans le cas contraire, la condition GN=1 est ensuite vérifiée par le bloc CB28.

Si la condition GN =1 est Vraie (V), la machine SM commute vers l'état GN_CR_BP du noeud L0N4. Dans le cas contraire, le processus de traitement boucle en début d'algorithme et poursuit sa veille d'un changement d'état au moyen des bloc conditionnels CB26, CB27 et CB28.

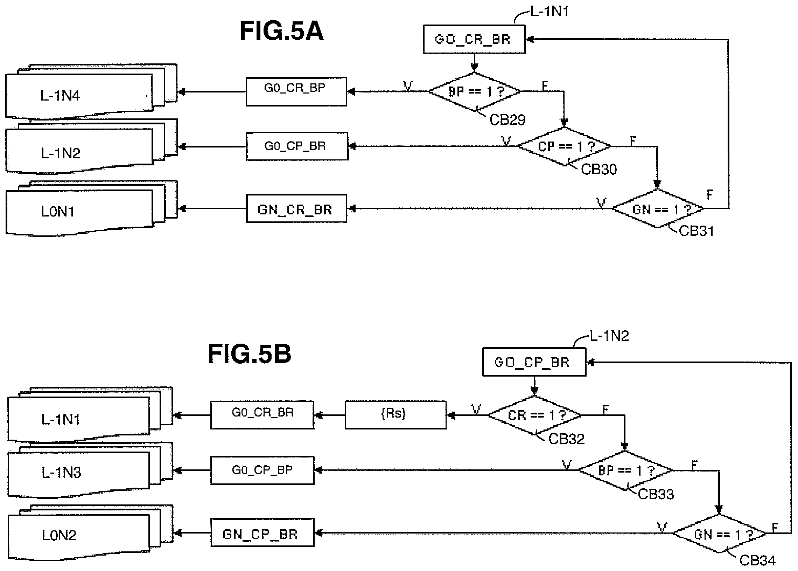

Comme montré à la Fig.5A sous la forme d'un algorithme logique, les transitions au niveau du noeud L-1N1, correspondant à la condition G0_CR_BR, sont traitées au moyen de trois blocs conditionnels CB29, CB30 et CB31.

Les blocs conditionnels CB29, CB30 et CB31 traitent les conditions BP, CP et GN respectivement.

A partir de G0_CR_BP, la condition BP =1 est vérifiée par le bloc CB29.

Si la condition BP =1 est Vraie (V), la machine SM commute vers l'état G0_CR_BP du noeud L-1N4. Dans le cas contraire, la condition CP=1 est ensuite vérifiée par le bloc CB30.

Si la condition CP =1 est Vraie (V), la machine SM commute vers l'état G0_CP_BR du noeud L-1N2. Dans le cas contraire, la condition GN=1 est ensuite vérifiée par le bloc CB31.

Si la condition GN =1 est Vraie (V), la machine SM commute vers l'état GN_CR_BR du noeud L0N1. Dans le cas contraire, le processus de traitement boucle en début d'algorithme et poursuit sa veille d'un changement d'état au moyen des blocs conditionnels CB29, CB30 et CB31.

Comme montré à la Fig.5B sous la forme d'un algorithme logique, les transitions au niveau du noeud L-1N2, correspondant à la condition G0_CP_BR, sont traitées au moyen de trois blocs conditionnels CB32, CB33 et CB34.

Les blocs conditionnels CB32, CB33 et CB34 traitent les conditions CR, BP et GN respectivement.

A partir de G0_CP_BP, la condition CR =1 est vérifiée par le bloc CB32.

Si la condition CR =1 est Vraie (V), la machine SM commute vers l'état G0_CR_BR du noeud L-1N1 et délivre la sortie d'anticipation de relance moteur {Rs}. Dans le cas contraire, la condition BP=1 est ensuite vérifiée par le bloc CB33.

Si la condition BP =1 est Vraie (V), la machine SM commute vers l'état G0_CP_BP du noeud L-1N3. Dans le cas contraire, la condition GN=1 est ensuite vérifiée par le bloc CB34.

Si la condition GN =1 est Vraie (V), la machine SM commute vers l'état GN_CP_BR du noeud L0N2. Dans le cas contraire, le processus de traitement boucle en début d'algorithme et poursuit sa veille d'un changement d'état au moyen des blocs conditionnels CB32, CB33 et CB34.

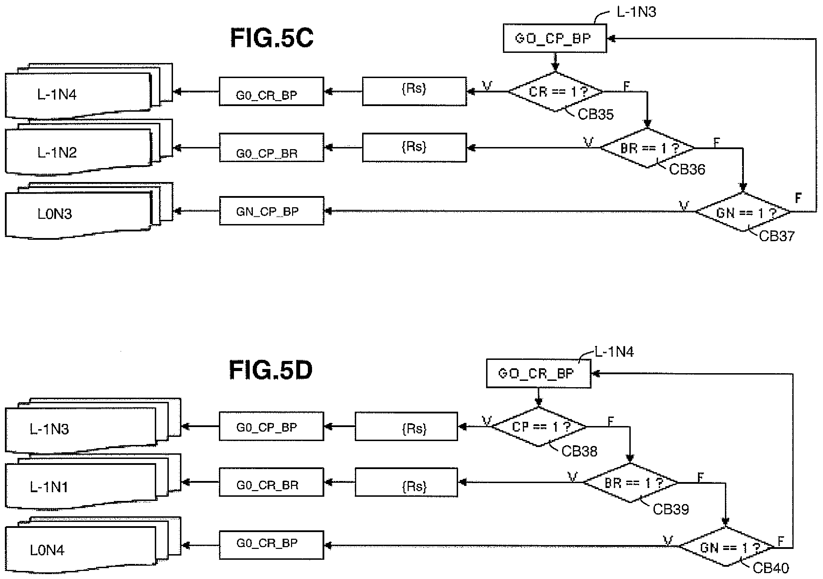

Comme montré à la Fig.5C sous la forme d'un algorithme logique, les transitions au niveau du noeud L-1N3, correspondant à la condition G0_CP_BP, sont traitées au moyen de trois blocs conditionnels CB35, CB36 et CB37.

Les blocs conditionnels CB35, CB36 et CB37 traitent les conditions CR, BR et GN respectivement.

A partir de G0_CP_BP, la condition CR =1 est vérifiée par le bloc CB35.

Si la condition CR =1 est Vraie (V), la machine SM commute vers l'état G0_CR_BP du noeud L-1N4 et délivre la sortie d'anticipation de relance moteur {Rs}. Dans le cas contraire, la condition BR=1 est ensuite vérifiée par le bloc CB36.

Si la condition BR =1 est Vraie (V), la machine SM commute vers l'état G0_CP_BP du noeud L-1N2 et délivre la sortie d'anticipation de relance moteur {Rs}. Dans le cas contraire, la condition GN=1 est ensuite vérifiée par le bloc CB37.

Si la condition GN =1 est Vraie (V), la machine SM commute vers l'état GN_CP_BP du noeud L0N3. Dans le cas contraire, le processus de traitement boucle en début d'algorithme et poursuit sa veille d'un changement d'état au moyen des blocs conditionnels CB35, CB36 et CB37.

Comme montré à la Fig.5D sous la forme d'un algorithme logique, les transitions au niveau du noeud L-1N4, correspondant à la condition G0_CR_BP, sont traitées au moyen de trois blocs conditionnels CB38, CB39 et CB40.

Les blocs conditionnels CB38, CB39 et CB40 traitent les conditions CP, BR et GN respectivement.

A partir de G0_CR_BP, la condition CP =1 est vérifiée par le bloc CB38.

Si la condition CP =1 est Vraie (V), la machine SM commute vers l'état G0_CP_BP du noeud L-1N3 et délivre la sortie d'anticipation de relance moteur {Rs}. Dans le cas contraire, la condition BR=1 est ensuite vérifiée par le bloc CB39.

Si la condition BR =1 est Vraie (V), la machine SM commute vers l'état G0_CR_BR du noeud L-1N1 et délivre la sortie d'anticipation de relance moteur {Rs}. Dans le cas contraire, la condition GN=1 est ensuite vérifiée par le bloc CB40.

Si la condition GN =1 est Vraie (V), la machine SM commute vers l'état GN_CR_BP du noeud L0N4. Dans le cas contraire, le processus de traitement boucle en début d'algorithme et poursuit sa veille d'un changement d'état au moyen des blocs conditionnels CB38, CB39 et CB40.

## Revendications

1. Système d'arrêt/relance moteur pour un véhicule équipé d'un moteur thermique, comprenant une machine électrique tournante réversible de type alterno-démarreur (10) et des moyens électroniques (11, 12, 13) comportant un module de pilotage de relance moteur (131), comprenant également des moyens de détection (S1 à S4) équipant des organes de bord (L4, S1 à S4) du véhicule pour détecter des états (CP, CR, BP, BR, G12, GN, G0) desdits organes de bord (L4, S1 à S4), et une machine d'états (SM) incluse dans ledit module de pilotage de relance moteur (131) et apte à délivrer une anticipation d'un ordre de relance dudit moteur thermique à partir d'un suivi séquentiel des états desdits organes de bord (L4, S1 à S4), **caractérisé en ce que** ladite anticipation est utilisée par ledit module de pilotage de relance moteur (131) pour commander une opération de débrayage (CCS) d'un système d'embrayage piloté (20) équipant le véhicule, et **en ce que** ladite machine d'états comporte un nombre prédéterminé de noeuds d'état (N1 à N4) répartis sur trois niveaux d'états (L0, L+1, L-1), un premier niveau d'états (L0) regroupant des états dans lesquels un levier de changement de vitesse (L4) desdits organes de bord (L4, S1 à S4) du véhicule est dans une position « neutre » (GN), un second niveau d'états (L+1) regroupant des états dans lesquels ledit levier de changement de vitesse (L4) est dans une position «vitesse 1» ou «vitesse 2» (G12) et un troisième niveau d'états (L-1) regroupant des états dans lesquels ledit levier de changement de vitesse (L4) est dans des positions (G0) autres que celles correspondant auxdits premier et second niveaux d'états (L0, L+1), ladite anticipation d'un ordre de relance produite par ladite machine d'états (SM) étant utilisée par ledit module de pilotage de relance moteur (131) pour commander une opération de pré-magnétisation d'un rotor (101) de ladite machine électrique tournante réversible (10).

2. Système selon la revendication 1, **caractérisé en ce que** lesdits moyens de détection (S1 à S4) comprennent un premier capteur (S4) détectant des états (GN, G12, G0) d'un levier de changement de vitesse (L4) desdits organes de bord (L4, P1 à P4) du véhicule.

3. Système selon l'une quelconque des revendications 1 ou 2, **caractérisé en ce que** lesdits moyens de détection (S1 à S4) comprennent un second capteur détectant des efforts appliqués par le conducteur sur un levier de changement de vitesse (L4) du véhicule.

4. Système selon l'une quelconque des revendications précédentes, **caractérisé en ce que** lesdits moyens de détection (S1 à S4) comprennent un troisième capteur (S1) détectant des états d'une pédale d'embrayage (P1) du véhicule.

5. Système selon l'une quelconque des revendications 1 à 4, **caractérisé en ce que** lesdits moyens de détection (S1 à S4) comprennent un quatrième capteur (S2) détectant des états d'une pédale de frein (P2) du véhicule.

6. Système selon l'une quelconque des revendication 1 à 5, **caractérisé en ce que** lesdits moyens de détection (S1 à S4) comprennent au moins un capteur (S1 à S3) de type tout-ou-rien qui détecte un actionnement d'une pédale correspondante (P1 à P3) desdits organes de bord (L4, P1 à P3) dans une zone de début de course (0 à 10%) de celle-ci ou un actionnement de ladite pédale correspondante (P1 à P3) dans une zone de fin de course (90 à 100%) de celle-ci.

7. Véhicule à boîte de vitesses manuelle et système d'embrayage piloté, **caractérisé en ce qu'**il comprend un système d'arrêt/relance moteur à alterno-démarreur selon l'une quelconque des revendications 1 à 6.

## Patentansprüche

1. System zum Stoppen/Neustarten eines Motors für ein Fahrzeug, das mit einem Verbrennungsmotor ausgestattet ist, umfassend eine reversible rotierende elektrische Maschine des Typs des Generatorstarter (10) und elektronische Mittel (11, 12, 13), die ein Steuermodul zum Neustarten eines Motors (131) aufweisen, ebenfalls umfassend Erfassungsmittel (S1 bis S4), mit denen Bordorgane (L4, S1 bis S4) des Fahrzeugs ausgestattet sind, um Zustände (CP, CR, BP, BR, G12, GN, G0) der Bordorgane (L4, S1 bis S4) zu erfassen, und eine Zustandsmaschine (SM), die in dem Steuermodul zum Neustarten eines Motors (131) enthalten ist und geeignet ist, eine Vorwegnahme eines Befehls zum Neustarten des Verbrennungsmotors ausgehend von einer sequentiellen Überwachung der Zustände der Bordorgane (L4, S1 bis S4) auszustellen, **dadurch gekennzeichnet, dass** die Vorwegnahme von dem Steuermodul zum Neustarten eines Motors (131) verwendet wird, um einen Entkuppelungsvorgang (CCS) eines gesteuerten Kupplungssystems (20), mit dem das Fahrzeug ausgestattet ist, zu steuern, und dadurch, dass die Zustandsmaschine eine vorbestimmte Anzahl von Zustandsknoten (N1 bis N4) aufweist, die auf drei Zustandsebenen (L0, L+1, L-1) aufgeteilt sind, eine erste Zustandsebene (L0), die die Zustände zusammenfasst, in denen sich ein Gangschaltungshebel (L4) der Bordorgane (L4, S1 bis S4) des Fahrzeugs in einer "neutralen" Position (GN) befindet, eine zweite Zustandsebene (L+1), die Zustände zusammenfasst, in denen sich der Gangschaltungshebel (L4) in einer Position "Gang 1" oder "Gang 2" (G12) befindet, und eine dritte Zustandsebene (L-1), die Zustände zusammenfasst, in denen sich der Gangschaltungshebel (L4) in anderen Positionen (G0) als jenen befindet, die der ersten und zweiten Zustandsebene (L0, L+1) entsprechen, wobei die Vorwegnahme eines Befehls zum Neustarten, die durch die Zustandsmaschine (SM) erzeugt wird, durch das Steuermodul zum Neustarten eines Motors (131) verwendet wird, um einen Vormagnetisierungsvorgang eines Rotors (101) der reversiblen rotierenden elektrischen Maschine (10) zu steuern.

2. System nach Anspruch 1, **dadurch gekennzeichnet, dass** die Erfassungsmittel (S1 bis S4) einen ersten Sensor (S4) aufweisen, der Zustände (GN, G12, G0) eines Gangschaltungshebels (L4) der Bordorgane (L4, P1 bis P4) des Fahrzeugs erfasst.

3. System nach einem der Ansprüche 1 oder 2, **dadurch gekennzeichnet, dass** die Erfassungsmittel (S1 bis S4) einen zweiten Sensor aufweisen, der Kräfte erfasst, die von dem Fahrer auf einen Gangschaltungshebel (L4) des Fahrzeugs aufgebracht werden.

4. System nach einem der vorhergehenden Ansprüche, **dadurch gekennzeichnet, dass** die Erfassungsmittel (S1 bis S4) einen dritten Sensor (S1) aufweisen, der Zustände eines Kupplungspedals (P1) des Fahrzeugs erfasst.

5. System nach einem der Ansprüche 1 bis 4, **dadurch gekennzeichnet, dass** die Erfassungsmittel (S1 bis S4) einen vierten Sensor (S2) aufweisen, der Zustände eines Bremspedals (P2) des Fahrzeugs erfasst.

6. System nach einem der Ansprüche 1 bis 5, **dadurch gekennzeichnet, dass** die Erfassungsmittel (S1 bis S4) mindestens einen Sensor (S1 bis S3) des Typs des Zweipunktsensors aufweisen, der ein Betätigen eines entsprechenden Pedals (P1 bis P3) der Bordorgane (L4, P1 bis P3) in einem Bereich des Beginns des Wegs (0 bis 10 %) von diesem oder ein Betätigen des entsprechenden Pedals (P1 bis P3) in einem Bereich des Endes des Wegs (90 bis 100 %) von diesem erfasst.

7. Fahrzeug mit Handschaltgetriebe und gesteuertem Kupplungssystem, **dadurch gekennzeichnet, dass** es ein System zum Stoppen/Neustarten eines Motors mit Generatorstarter nach einem der Ansprüche 1 bis 6 aufweist.

## Claims

1. Engine stop/restart system for a vehicle equipped with a thermal combustion engine, comprising a starter-alternator reversible rotating electrical machine (10) and electronic means (11, 12, 13) including an engine restart control module (131), also comprising detection means (S1 to S4) fitted to on-board units (L4, S1 to S4) of the vehicle in order to detect states (CP, CR, BP, BR, G12, GN, G0) of said on-board units (L4, S1 to S4), and a state machine (SM) contained in said engine restart control module (131) and able to deliver a forecast of an order to restart said thermal combustion engine based on sequential monitoring of the states of said on-board units (L1, S1 to S4), **characterized in that** said forecast is used by said engine restart control module (131) to command a clutch operation (CCS) of a controlled clutch system (20) fitted to the vehicle, and **in that** said state machine includes a predetermined number of state nodes (N1 to N4) distributed over three state levels (L0, L+1, L-1), a first state level (L0) grouping together states in which a gear lever (L4) of said on-board units (L4, S1 to S4) of the vehicle is in a "neutral" position (GN), a second state level (L+1) grouping together states in which said gear lever (L4) is in a "1st gear" or "2nd gear" position (G12) and a third state level (L-1) grouping together states in which said gear lever (L4) is in positions (G0) other than those corresponding to said first and second state levels (L0, L+1), said forecast of a restart order produced by said state machine (SM) being used by said engine restart control module (131) to command an operation of pre-magnetizing a rotor (101) of said reversible rotating electrical machine (10).

2. System according to Claim 1, **characterized in that** said detection means (S1 to S4) comprise a first sensor (S4) detecting states (GN, G12, G0) of a gear lever (L4) of said on-board units (L4, P1 to P4) of the vehicle.

3. System according to either one of Claims 1 and 2, **characterized in that** said detection means (S1 to S4) comprise a second sensor detecting forces applied to a gear lever (L4) of the vehicle by the driver.

4. System according to any one of the preceding claims, **characterized in that** said detection means (S1 to S4) comprise a third sensor (S1) detecting states of a clutch pedal (P1) of the vehicle.

5. System according to any one of Claims 1 to 4, **characterized in that** said detection means (S1 to S4) comprise a fourth sensor (S2) detecting states of a brake pedal (P2) of the vehicle.

6. System according to any one of Claims 1 to 5, **characterized in that** said detection means (S1 to S4) comprise at least one all-or-nothing sensor (S1 to S3) that detects actuation of a corresponding pedal (P1 to P3) of said on-board units (L4, P1 to P3) in a start of travel zone (0 to 10%) thereof or actuation of said corresponding pedal (P1 to P3) in an end of travel zone (90 to 100%) thereof.

7. Vehicle having a manual gearbox and controlled clutch system, **characterized in that** it comprises a starter-alternator engine stop/restart system according to any one of Claims 1 to 6.
